# EUROPÄISCHE PATENTANMELDUNG

(11) **EP 1 126 477 A2**
(43) Veröffentlichungstag der Anmeldung: **22.08.2001**
(21) Anmeldenummer: 01103184.6
(22) Anmeldetag: 10.02.2001
(51) Int. Cl.: G21K 7/00

(54) **Verfahren zur Untersuchung von Strukturen auf einem Halbleiter-Substrat**

(30) Priorität: 14.02.2000 US 182375 P
(71) Anmelder: Leica Microsystems Lithography GmbH, 07745 Jena (DE)
(72) Erfinder: Schneider, Gerd,Dr., 31167 Bockenem/Bornum (DE); Niemann, Bastian,Dr., 37077 Göttingen (DE); Hambach, Dirk, 80803 München (DE)
(74) Vertreter: Reichert, Werner F., Dr.

(57) **Zusammenfassung**

Der Erfindung liegt ein Verfahren und eine Vorrichtung zur Untersuchung von Strukturen auf einem Halbleiter-Substrat zugrunde, bei denen die Strukturen mit Röntgenstrahlung in einem abbildenden Röntgenmikroskop abgebildet werden. Die Wellenlänge der Röntgenstrahlung wird in Abhängigkeit der Dicke des Halbleiter-Substrats derart eingestellt, dass sowohl eine geeignete Transmission der Röntgenstrahlung durch das Halbleiter-Substrat als auch ein kontrastreiches Bild erhalten wird. Dadurch können die Strukturen mit kurzen Belichtungszeiten, kontinuierlich und mit hoher Auflösung auch während ihres Betriebs beobachtet werden.

## Beschreibung

Die Erfindung betrifft ein Verfahren zur Untersuchung von Strukturen auf einem Halbleiter-Substrat. Die Strukturen können insbesondere betriebsfähige integrierte und nicht integrierte elektronische Schaltkreise im Mikro- und Nanometerbereich sein oder auch mikromechanische Bauteile im Mikro- und Nanometerbereich.

Die Strukturen von Halbleiterbauelementen wie z.B. Speicherbausteinen, Mikroprozessoren, Logikbausteinen werden auf einem Halbleiter-Substrat, einem sogenannten "Wafer" gefertigt, der im allgemeinen aus einem Silizium-Einkristall besteht und meistens eine Dicke zwischen 200 µm und 600 µm aufweist. Zudem gibt es auch spezielle Wafer mit sehr dünnen Halbleiter-Substraten, deren Dicken weit unter 100 µm liegen.

Auf derartigen Wafern werden mit Hilfe von Lithographie, Beschichtungs- und Dotierungsverfahren Halbleiter-Bauelemente gefertigt, die sich in sehr oberfächennahen Schichten von wenigen Mikrometern Dicke befinden und deren Strukturen laterale Ausdehnungen von derzeit etwa 200 nm oder weniger haben können. Um einen benutzbaren Halbeiterchip daraus zu fertigen, müssen die so gefertigten Strukturen mit elektrischen Leitungen versehen werden, die wiederum mit Hilfe der Lithographie erzeugt werden können. Die Leitungen bestehen im allgemeinem aus Metallen wie z.B. Kupfer oder Aluminium. Auch Wolfram und Tantal werden eingesetzt. Damit sich solche Leiterbahnen ohne elektrischen Kurzschluß kreuzen können, werden in Zwischenschritten elektrisch isolierende Zwischenschichten angebracht, deren laterale Ausdehnung und Form wiederum genauestens mit Hilfe der Lithographie dimensioniert werden kann. Dabei müssen dann später wiederum mit Hilfe verschiedener Verfahren elektrische Verbindungen in vertikaler Richtung erzeugt werden, mit denen Leitungen oder dotierte Zonen der einen Ebene die Leitungen der anderen Ebene durch den Isolator hindurch kontaktieren. Im Resultat entsteht also ein dreidimensionales Gebilde aus halbleitenden, leitenden und isolierenden Strukturen, die in ihrer räumlichen Lage genau aufeinander abgestimmt sein müssen.

Treten Fehler in solchen Strukturen auf, so müssen sie untersucht werden. Dies geschieht z.B. mit Hilfe von Mikroskopen. Eingesetzt werden bereits Lichtmikroskope, Rasterelektronenmikroskope, Atomic Force Mikroskope (AFM) und akustische Mikroskope.

Dabei ist bei optischen Mikroskopen nachteilig, dass diese Mikroskope nahe ihrer Auflösungsgrenze arbeiten, denn die Größe der zu untersuchenden Strukturen und die Wellenlänge des Lichtes, die physikalisch die Auflösung eines Mikroskops begrenzt, sind etwa gleich groß.

Man versucht teilweise, z.B. die Haftung von elektronischen Strukturen auf dem Substrat mit Hilfe von akustischen Mikroskopen zu untersuchen, indem das unterschiedliche Reflexionsvermögen der Schallwellen an solchen Fehlstellen genutzt wird. Dabei steht allerdings wiederum die begrenzte Auflösung der akustischen Mikroskope hinderlich im Wege.

Andere Untersuchungen können im Elektronenmikroskop erfolgen, wenn die zu untersuchenden Strukturen vorher freigelegt werden, indem das die Strukturen tragende Substrat z.B. chemisch entfernt wird. Ein solches Verfahren ist also nicht zerstörungsfrei und erfordert eine sorgfältige Präparation der freizulegenden Schichtstrukturen. Zudem können mit dem Elektronenmikroskop nur sehr dünne Schichten durchstrahlt werden, eine dreidimensionale tomographische Rekonstruktion in der Tiefe stärker ausgedehnter Strukturen ist nicht möglich.

Auf modernen Computerchips befindet sich eine Vielzahl von Transistoren, die mit feinen Drähten, sogenannten Leiterbahnen aus z.B. Aluminium oder Kupfer miteinander verbunden sind. Wenn man sich einen solchen Chip bei ausreichender Vergrößerung im Lichtmikroskop ansieht, so kann man auch in diesen Leiterbahnen Korngrenzen erkennen.

Die Leiterbahnen in modernen mikroelektronischen Bauelementen können ohne übermäßige Erwärmung sehr hohe Stromdichten von 10⁶ A/cm² und mehr tragen, da sie durch Einbettung in die umgebenden Silizium- oder Dielektrika-Schichten effektiv gekühlt werden. Die Stromdichten sind derart groß, dass viele Elektronen direkt auf die Atomrümpfe treffen, und diese in Stromrichtung örtlich verschieben können - dieser Effekt wird Elektromigration genannt und kann zur Beschädigung oder Zerstörung der Leiterbahnen führen.

Da sich die Atome besonders leicht in Korngrenzen oder Grenzflächen zwischen dem Metall der Leiterbahnen und umgebenden Materialien bewegen können, kann es dazu kommen, dass sich durch den hohen Materialtransport an gewissen Stellen Löcher bilden und an anderen Stellen Material aus der Leiterbahn herausgedrückt wird. Beides kann zum Ausfall der Leiterbahn und damit zum Versagen des ganzen Chips führen. Dieser Effekt könnte in absehbarer Zeit die weitere Miniaturisierung von Computerchips beschränken und daher arbeiten Werkstoffwissenschaftler auf der ganzen Welt sehr intensiv an diesem Problem.

Elektromigration in Leiterbahnen ist eine der Hauptausfallursachen integrierter Schaltkreise und aufgrund immer höherer Integration der Schaltkreise weiterhin ein großes Problem. Zur Lebensdaueruntersuchung von Leiterbahnmetallisierungen werden zeitlich hochbeschleunigte Tests bei erhöhten Belastungsbedingungen, wie erhöhter Stromdichte und erhöhter Temperatur durchgeführt. Oft werden zur Untersuchung der Migrationsprozesse unpassivierte Leiterbahnen verwendet, da diese eine bessere mikroskopische Untersuchung der Ausfallstellen mit besonders hoher räumlicher Auflösung ermöglichen. Das Weglassen der über den Leiterbahnen aufgebrachten Passivierung, d.h. der über den Leiterbahnen aufgebrachten schützenden Isolationsschichten aus z.B. SiO₂, Si₃N₄ oder Kunststoff, führt im allgemeinen zu einem veränderten Ablauf der Elektromigrationsprozeße. Diese sind nämlich mit Materialtransport und damit mit *lokalen Volumenänderungen* verbunden, wodurch die Druck- und Temperaturverhältnisse in der Umgebung der Leiterbahn durch die Passivierungsschichten beeinflußt sind. Daher zeigen unpassivierte Leiterbahnen, bei denen die darüber liegenden Isolationsschichten fehlen, im allgemeinen ein etwas anderes Verhalten z.B. bei der Elektromigration als die in der Praxis genutzten passivierten Bausteine.

Daher wird ein Abbildungsverfahren benötigt, das hohe räumliche Auflösung auch dann erlaubt, wenn die zu untersuchenden Strukturen unter Dielektrika oder Isolationsschichten von mehreren µm Dicke liegen. Die mit Mikroskopen für sichtbares Licht erreichbare Auflösung ist oft zu gering. Mit Transmissionselektronenmikroskopen können nur Schichten bis zu höchstens 1µm Dicke hochauflösend abgebildet werden. Oberflächenempfindliche Methoden wie AFM (Atom-Kraft-Mikroskop) oder SEM (Sekundär-Elektronen-Mikroskop) erfordern entweder eine zerstörende Probenpräparation oder erreichen wegen der Elektronenstreuung in dicken Passivierungsschichten nur eine schlechte Auflösung. Atom-Kraft-Mikroskope haben zudem den Nachteil, dass sie als scannende Systeme relativ lange Untersuchungszeiten benötigen und dass mit ihnen keine Echtzeitaufnahmen für eine kontinuierliche Beobachtung möglich ist.

Prinzipiell ist es möglich, dünne metallische Strukturen auch mit einem Röntgenmikroskop zu untersuchen. Röntgenmikroskope arbeiten im Wellenlängen-Bereich unterhalb von maximal 20 nm. Da die maximal mögliche Auflösung eines Mikroskops von der Größe der halben Wellenlänge ist, läßt sich mit einem Röntgenmikroskop eine deutlich höhere Auflösung erreichen als mit einem Mikroskop für sichtbares Licht oder UV-Strahlung. Dabei ist das Durchdringungsvermögen der Röntgenstrahlung durch eine Probe im allgemeinen um so größer, je kürzer die Wellenlänge der benutzten Strahlung ist und je dünner die Probe ist.

Die Röntgenstrahlung wird auch in Luft unter Normalbedingung je nach Wellenlänge zum Teil erheblich geschwächt. Da üblicherweise für ein Röntgenmikroskop Baulängen von einigen Metern erreicht werden, wird, um nicht unnötig Strahlung durch Absorption zu verlieren, die Strahlung stets in evakuierten Kammern geleitet bis zu einem Bereich, der sich nahe am Objekt befindet. Dort wird die Strahlung durch ein dünnes Fenster, das z.B. aus einer dünnen aber druckfesten Folie besteht, in Luft unter Normalbedingung geleitet, in der sich auch die Probe befindet. Hinter der Probe kann üblicherweise wieder ein Fenster an einer weiteren evakuierten Kammer befindlich sein, in der sich das abbildende Röntgenobjektiv befindet und in der die Röntgenstrahlung zum Röntgen-Detektor geführt wird. Die Probe kann aber auch von einer verschließbaren Kammer umgeben sein, die mit einem Schutzgas gefüllt wird oder evakuiert wird.

Für Wellenlängen unter 20 nm kommen als hochauflösende Röntgenobjektive in Röntgenmikroskopen heutzutage nur noch Zonenplatten in Frage, da nur diese eine ausreichend hohe Auflösung liefern. Allerdings müssen diese mit monochromatischer Strahlung betrieben werden, da die Brennweite umgekehrt proportional zur Wellenlänge ist.

Röntgenstrahlungsquellen für die Röntgenmikroskope sind z.B. Ablenkmagnete, Wiggler oder Undulatoren von Elektronenstrahl-Speicherringen. Die Strahlung aus Undulatoren ist quasi-monochromatisch (die Wellenlänge λ bezogen auf die Bandbreite Δλ, also λ/△λ beträgt etwa 100) und ist damit direkt geeignet für Röntgenmikroskope, die als Röntgenobjektive Zonenplatten mit sehr niedrigen Zonenzahlen (typisch 100 Zonen) nutzen; bei Verwendung von Zonenplatten höherer Zonenzahlen oder wenn Wiggler oder Ablenkmagneten die Strahlungsquellen sind, muß die Röntgenstrahlung auf jeden Fall zusätzlich monochromatisiert werden.

Im Wellenlängenbereich unter 20 nm können Röntgenmikroskope im Amplitudenkontrast und im Phasenkontrast betrieben werden. Unterhalb von 2 nm Wellenlänge eignet sich Phasenkontrast in besonderer Weise, da er deutlich höhere Kontraste liefert als der Amplitudenkontrast. Der Grund hierfür liegt in den optischen Konstanten des Brechungsindexes für Röntgenstrahlung, die in diesem Wellenlängenbereich den Phasenkontrast begünstigen.

Es gibt zwei wichtige Typen von Röntgenmikroskopen, abbildende und rasternde Röntgenmikroskope. Die abbildenden Röntgenmikroskope erzeugen ein reelles Bild, das sich mit einer Kamera aufzeichnen lässt. Um bei Verwendung eines abbildenden Röntgenmikroskops einen Betrieb im Phasenkontrast zu erreichen, muß in der hinteren Fokalebene der zur Abbildung benutzten Zonenplatte eine Phasenplatte mit geeigneter Phasenschiebung angeordnet werden. Weitere Details sind in der Fachliteratur bereits ausführlich beschrieben.

Rasternde Röntgenmikroskope erzeugen ein Bild durch ein serielles Verfahren, bei dem das Objekt Punkt für Punkt durchstrahlt und das Bild auf einem Monitor erzeugt wird. Wegen dieser seriellen Bildaufzeichnung, die Punkt für Punkt vorgenommen wird, werden lange Untersuchungszeiten benötigt, so dass eine kontinuierliche Beobachtung eines Objektes nicht möglich ist. Die Bildaufbauzeiten liegen in einem Zeitbereich von 100 - 1000 Sekunden. Ein derartiges rasterndes Röntgenmikroskop für die dreidimensionale tomographische Rekonstruktion einer metallischen Verbindung in einem integrierten Schaltkreis ist bekannt aus dem Artikel von Zachary H. Levine, Andrew R. Kakulin, Sean P. Frigo, lan McNulty und Markus Kuhn: "Tomographic reconstruction of an integrated circuit connnect", Applied Physics Letters, Vol. 74, No.1, page 150-152, January 4, 1999. Die Dicke des Substrats wurde für die Untersuchung auf wenige um gedünnt.

Es ist die Aufgabe der Erfindung, ein Verfahren und eine Vorrichtung zur Untersuchung von Strukturen, insbesondere funktionsfähigen Strukturen auf Halbleiter-Substraten anzugeben, mit denen sich die Strukturen zerstörungsarm, mit kurzen Belichtungszeiten, kontinuierlich, auch während ihres Betriebs und mit einer gegenüber optischen Mikroskopen besseren Auflösung beobachten lassen und wobei die Strukturen nicht vom Substrat getrennt werden müssen.

Diese Aufgabe wird durch die Merkmale des Anspruchs 1 (Verfahrensanspruch) bzw. durch die Merkmale des Anspruchs 8 (Vorrichtungsanspruch) gelöst.

Vorteilhafte Weiterbildungen des Verfahrens bzw. der Vorrichtung ergeben sich aus den entsprechenden Unteransprüchen.

Gemäß der Erfindung wird für die Untersuchung der Strukturen auf einem Halbleiter-Substrat ein abbildendes Röntgenmikroskop verwendet. Dabei werden die Strukturen mit Röntgenstrahlung durchstrahlt und auf einen ortsauflösenden Detektor abgebildet. Es werden geeignete Wellenlängen der Röntgenstrahlung in Abhängigkeit der Dicke des Halbleiter-Substrats derart eingestellt, dass sowohl eine für eine Detektion der Röntgenstrahlung ausreichende Transmission der Röntgenstrahlung durch das Halbleiter-Substrat als auch ein kontrastreiches Bild gewährleistet ist. Hierfür sind bei vielen Proben die Dicken der Substrate bereits ausreichend gering. In allen anderen Fällen müssen die Dicken der Substrate in geeigneter Weise, beispielsweise durch Ätzen, entsprechend reduziert werden.

Besteht insbesondere das Substrat aus Silizium, so werden für die Röntgenstrahlung vorzugsweise Wellenlängen zwischen 2 nm und 0.1 nm eingestellt, wobei die Dicke der Siliziumscheibe ("Wafer") vorzugsweise zwischen 10 µm und 30 µm betragen sollte.

Bei größeren Substratdicken, insbesondere bei Dicken über 100 µm ist die Strahlungs-Absorption durch das Siliziumsubstrat so hoch, daß die Strahlung nahezu vollständig darin absorbiert wird, was zu sehr langen Belichtungszeiten für das röntgenmikroskopische Bild führen würde. Deshalb werden Wafer mit solchen Substratdicken entsprechend gedünnt, wobei sich die Funktionsfähigkeit der Strukturen nicht verändert. Befinden sich dabei die Strukturen nur auf einer Seite auf dem Siliziumsubstrat und ist die andere Seite strukturfrei (was bei den meisten Substraten der Fall ist), so kann von der strukturfreien Rückseite her das Substrat gedünnt werden.

Die Strukturen sind bei Wafern, auf denen elektrische Schaltkreise integriert sind, aktive Leiterbahnschichtsysteme und dotierte Bereiche. Sie stellen die elektronischen Bauelemente auf dem Wafer dar. Deren elektrische Funktionsfähigkeit wird aufgrund einer eventuellen Dünnung nicht eingeschränkt, da sich die elektronischen Bauelemente nur bis in Tiefen von wenigen Mikrometern erstrecken und bei der Dünnung des Substrats noch eine ausreichende Substratdicke bestehen bleibt.

Zudem können auf Substraten und speziell auf Siliziumwafern auch mikromechanische Strukturen auf oder in die Oberfläche des Substrats eingebracht werden. Solche mikromechanischen Strukturen können z.B. die Membranen eines Drucksensors, bewegliche Strukturen eines Beschleunigungssensors oder mikromechanische Zahnräder oder Pumpen sein. Solche Strukturen können ebenfalls mit der erfindungsgemäßen Methode untersucht werden.

Als Substrate kommen alle Materialien in Frage, auf denen und mit denen die gewünschten Strukturen erzeugt werden können. Insbesondere ist Silizium für mikroelektronische Schaltkreise und auch für mikromechanische Bauelemente geeignet, jedoch sind auch alle anderen, für Halbleiterbausteine dotierbaren Kristalle wie z.B. Gallium-Arsenid einsetzbar.

Mit den gegebenenfalls gedünnten Halbleiter-Substraten und der Verwendung von abbildenden Röntgenmikroskopen und mit den auf die Subtratdicke eingestellten Wellenlängen der Röntgenstrahlung werden Belichtungszeiten in der Größenordnung von 1 Sekunde erreicht. Damit sind Echtzeitaufnahmen der Strukturen auf den Substraten möglich und können kontinuierlich während ihres Betriebs beobachtet werden.

Vorteilhaft ist bei der erfindungsgemäßen Methode, dass die Strukturen nicht zerstört zu werden brauchen, wie es bei vielen anderen Verfahren notwendig ist, bei denen die oberen Schichten der Strukturen mechanisch oder durch Ätzen entfernt werden müssen, um die darunter liegenden Strukturen sichtbar zu machen und diese z.B. mit einem optischen Mikroskop untersuchen zu können. Mit Hilfe der ausgewählten Röntgenstrahlung und des abbildenden Röntgenmikroskops gemäß der Erfindung können die vollständigen, betriebsfähigen Strukturen untersucht werden, insbesondere ihre Größe und gegenseitige Lage. Zudem sind die betriebsfähigen Strukturen aufgrund der kontinuierlichen Bildaufnahmen in Echtzeit sogar auch während ihres Betriebs beobachtbar, wodurch Bewegungen der Strukturen oder eventuelle Strukturänderungen der mikromechanischen oder elektronischen Strukturen zeitlich verfolgt werden können.

Generell ist mit der Röntgenstrahlung immer eine gewisse Strahlenschädigung von Materialien verbunden. Deswegen ist es vorteilhaft, die strukturfreie Seite des Substrats der einfallenden Röntgenstrahlung zuerst auszusetzen, so dass zuerst das Substrat einen Teil der Strahlung absorbiert. Die Belichtungszeit und dadurch indirekt auch die Strahlenschädigung der auf dem Substrat befindlichen Funktionselemente wird durch eine sorgfältige Wahl der Wellenlänge unter Berechnung der röntgenoptischen Transmission des Substrats und des Streuvermögens der darauf befindlichen, zu untersuchenden Strukturen minimiert.

Das Verfahren erlaubt voll funktionsfähige Schaltungen auf Wafern - auch während ihres Betriebs - mit höherer als lichtoptischer Auflösung zu untersuchen. Dies kann unter verschiedenen Parametern und äußeren Beeinflussungen geschehen, z.B. sind Migrationsprozesse in passivierten Leitbahnen studierbar und zudem ist durch tomographische Rekonstruktion von röntgenmikroskopischen Bildern eine dreidimensionale Darstellung möglich. Dazu ist es nötig, das Objekt unter einer Vielzahl verschiedener Kippwinkel abzubilden.

Änderungen der Materialverteilungen bei Elektro-Migrationsprozeßen können studiert werden. Damit ist es möglich, dies auch mit den technologisch relevanten *passivierten* Leiterbahnen durchzuführen wie sie in kommerziellen integrierten Schaltkreisen üblicherweise verwendet werden, und die Untersuchungsergebnisse mit Modellrechnungen zu vergleichen. Dadurch erhält man bessere Daten für die Simulation und Entwicklung von integrierten Schaltkreisen.

Ganz allgemein sind für die Untersuchung der Strukturen alle Strahlungsquellen geeignet, die intensive Röntgenstrahlung im Wellenlängenbereich zwischen 2 und 0.1 nm Wellenlänge liefern, wobei von solchen Quellen am besten nicht nur eine bestimmte, in der Wellenlänge festgelegte Linienstrahlung ausgehen sollte, um möglichst viele der im folgenden noch beschriebenen Anwendungen zu ermöglichen.

Röntgenmikroskope mit Zonenplatten müssen mit monochromatischer Strahlung betrieben werden, da Zonenplatten chromatische Aberration zeigen. Für die weiter unten näher beschriebenen Verfahren ist dieses jedoch kein grundsätzlicher Nachteil, da für einen Teil der beschriebenen Verfahren vom Prinzip her monochromatische Röntgenstrahlung benutzt werden muß.

Die Monochromatisierung kann z.B. mit einem Monochromator erfolgen, der auch Bestandteil des Kondensors im Mikroskops sein kann. Die Röntgenstrahlungsquellen können auch linear oder zirkular polarisierte Strahlung liefern, was für die Untersuchung des "circular magnetic dichroismus" ferromagnetischer Materialien bereits genutzt wird.

Da Undulatoren Röntgenstrahlung quasimonochromatisch emittieren und die Wellenlängen durchstimmbar sind, ist es möglich, eine beliebige Röntgen-Schwerpunktwellenlänge im genannten Wellenlängenbereich auszuwählen. Die Monochromasie der Strahlung kann dann mittels geeigneter Monochromatoren weiter erhöht werden, wenn es für die Untersuchungen notwendig ist (siehe weiter unten), so dass in Messungen mit Wellenlängen an den Absorptionskanten deren geringfügige Kanten-Verschiebungen zur Erzeugung eines Bildkontrastes genutzt werden können.

Bei 1 nm Wellenlänge haben Zonenplatten für Röntgenstrahlung typischerweise eine Brennweite von einigen mm, die Gegenstandsweite ist dann nach der Abbildungsgleichung je nach Röntgenvergrößerung etwas größer. Die Auflösung der derzeit verfügbaren Zonenplatten liegt für diesen Wellenlängenbereich bei 50 nm; sie ist damit deutlich besser als die eines Mikroskops für sichtbares Licht oder UV-Strahlung. Bei 0.1 nm Wellenlänge ist die Brennweite für ein gegebenes Zonenplattenobjektiv 10 mal so groß, da die Brennweite reziprok zur Wellenlänge ansteigt.

Wesentlich für eine Untersuchung von Halbleiterchips ist es, daß diese eine ausreichend hohe Röntgentransmission besitzen. Werden Röntgenmikroskope mit Röntgenwellenlängen im Bereich von weniger als 2 nm betrieben, so können bereits Schichten von einigen µm Dicke durchstrahlt werden. Der genaue Wert hängt ab von dem zu durchstrahlenden Material. Für Silizium, dem typischen Substratmaterial für Halbleiterchips, beträgt die 1/e Dicke, die noch mit 37 % Transmission durchdrungen wird, 4.8 µm bei einer Röntgenwellenlänge von 1 nm und 33.3 µm bei 0.2 nm Wellenlänge. Solche dünnen Substratschichten lassen sich bei normalen handelsüblichen Halbleiterbauelementen nachträglich herstellen, indem der zu untersuchende Chip von seiner Rückseite her mit einer ätzenden Substanz behandelt wird, z.B. mit einer chemisch aktiven Flüssigkeit wie z.B. Ethylendiamin, KOH oder Gemischen aus Flußsäure , Essigsäure und Salptersäure oder indem das Substrat durch reaktives Trockenätzen in einer Ätzanlage, in der reaktive lonen vorhanden sind, oder durch Ätzung mit neutralen oder geladenen Edelgasatomen gedünnt wird.

Dabei wird die mit elektronischen Strukturen versehene Seite vor der Ätzung geschützt, indem sie am einfachsten mit Wachs überzogen wird, welches nach der Ätzung wieder abgelöst wird. Es sind auch andere organische Materialien als Schutzschicht möglich, wenn sie sich mit Lösungsmitteln wieder lösen lassen ohne die elektronischen Schaltkreise zu schädigen. Es ist auch möglich, das Einwirken der zur Ätzung benutzten Mittel auf die elektronischen Strukturen zu verhindern, indem das zu dünnende Substrat als dichtender Deckel auf einen Topf gelegt wird, so daß die zu dünnende Seite nach außen bzw. innen zu liegen kommt, wenn die Ätzung von außen bzw. innen erfolgt. Desweiteren ist es möglich, solche Schichten durch chemisch unterstütztes mechanisches Schleifen zu dünnen.

Wird solch ein Halbleiterchip gedünnt, so kann die Kontrolle der restlich verbliebenen Dicke am einfachsten so geschehen, daß der Halbleiterchip von einer Seite mit sichtbarem Licht beleuchtet wird und auf der anderen Seite die Transmission des Lichts z.B. mit dem Auge kontrolliert wird oder einem lichtempfindlichen elektrischen Meßgerät gemessen wird.

Sobald eine Dicke von etwa 10 µm erreicht ist, wird Silizium merklich optisch transparent und die Dünnung muß abgebrochen werden, um die zu untersuchenden Strukturen und deren Funktionsfähigkeit selbst nicht zu beschädigen. Diese Dicke ist ausreichend gering, um mit Röntgenstrahlung von Wellenlängen kleiner als 2 nm bei sehr kurzen Belichtungszeiten durchstrahlt werden zu können.

Bei gegebener Schichtdicke und Röntgenwellenlänge besitzt jedes Material eine andere Transmission. Da die Röntgentransmission allgemein mit abnehmender Kernladungszahl eines chemischen Elements zunimmt, besitzt Kohlenstoff im Wellenlängenbereich zwischen 2nm und 0.1 nm eine wesentlich höhere Transmission als z.B: Silizium. Wird daher als luftdichter schützender Überzug der mit den elektrischen Strukturen versehenen Seite (Passivierung der Strukturen) ein Kunststoff benutzt, so beeinträchtigt dieser die Transmission im Wellenlängenbereich unter 2 nm kaum, wenn dessen Dicke um oder unter 10 µm liegt. Eine Dünnung dieser Kunststoff-Beschichtungen ist daher im allgemeinen nicht nötig.

Zum Teil liegen die Halbleiterbausteine auch in der kommerziellen Ausführung bereits gedünnt vor (z.B. bei Speicherbausteinen). Solche Bausteine können (nach Entfernen einer gegebenenfalls vorhandenen Ummantelung) direkt ohne weitere Dünnung mit kurzen Belichtungszeiten für das röntgenmikroskopische Bild untersucht werden.

Der (eventuell gedünnte) Halbleiter-Chip wird in den Objekthalter eines Röntgenmikroskops gebracht und bei einer sorgsam auszuwählenden Wellenlänge in Transmission beobachtet. Bei den benutzten Wellenlängen im Bereich zwischen 0.1 und 2 nm haben hochauflösende Zonenplatten-Objektive Schärfentiefen im Bereich von typisch 10 µm und mehr, was wesentlich größer ist als die Dicke der Leiterbahnen und dotierten Bereiche von Halbleiter-Chips (und unter Umständen größer sein kann als die Substratdicke des Halbleiter-Chips).

Unter diesen Bedingungen ergeben sich Gegenstandsweiten von bis zu über einem Zentimeter, die es erlauben, eine zu untersuchende Probe auch zu verkippen, um Durchstrahlungsbilder unter verschiedenen Winkeln zu erhalten, z.B. um Bilder für eine Stereobetrachtung zu erhalten. Wird eine ganze Serie von Bildern unter verschiedenen Winkeln mit Röntgenobjektiven hoher Schärfentiefe aufgenommen, so kann mit den numerischen Mitteln der tomographischen Rekonstruktion die dreidimensionale Struktur der Halbleiter-Chipstrukturen rechnerisch ermittelt werden.

Da Metalle wie Aluminium, Kupfer, Wolfram, Tantal im Wellenlängenbereich zwischen 0.1 und 2 nm Absorptionskanten zeigen, ändert sich der Bildkontrast stark, wenn Röntgenabbildungen bei Wellenlängen vor und hinter der entsprechenden Absorptionskante erfolgen. Dies ist möglich, da sich an den Absorptionskanten eines Elements dessen Absorption und Phasenschiebung nahezu sprunghaft ändern können. Damit ist es möglich, mittels der Abbildungen nahe der Absorptionskanten gezielt die räumliche Verteilung des entsprechenden Materials zu registrieren.

Die Untersuchung von funktionsfähigen Halbleiter-Chips im Röntgenmikroskop bietet noch weitere Vorteile. Da die Strahlung alle Strukturen durchdringt und auch deren Überdeckungen sichtbar macht, entsteht ein Bildeindruck der dem einer herkömmlichen medizinischen Röntgenaufnahme entspricht. Wird das Substrat ungekippt - die Substratfläche steht also senkrecht zur Röntgenstrahlung - abgebildet, so kann mit einer einzigen Aufnahme relativ kurzer Belichtungszeit das röntgenmikroskopische Bild beurteilt werden, wie sich die Strukturen auf dem Halbleiter-Chip überdecken und ob sie seitlich korrekt zueinander justiert sind. Ferner kann die Qualität der Strukturierung hinsichtlich Linienbreite, Kantenrauhigkeit, Gleichmäßigkeit der Schichtdicke direkt geprüft werden. Ebenso können Verunreinigungen detektiert werden.

Der Halbleiter-Chip kann sich in Luft, unter Schutzgas oder unter Vakuum befinden. Es können verschiedene Untersuchungen, insbesondere elektronische Prüfungen während der röntgenmikroskopischen Beobachtung durchgeführt werden. So ist es beispielsweise möglich, den Transport von Leiterbahnmaterial unter Stromfluß, die sogenannte Elektromigration zu beobachten. Prinzipiell ist es möglich, über einen weiten Temperaturbereich hinweg - von Temperaturen von mehreren 100°Celsius bis herunter zur Temperatur des flüssigen Heliums - Messungen durchzuführen, wobei bei Temperaturen unterhalb der Raumtemperatur die Umgebung der Probe mit einem wasserfreien Gas (z.B. N₂) gespült werden muß, um das Ausfrieren von Wasser auf der Probe zu verhindern, oder die Probenkammer mit Probe wird evakuiert.

Messungen an Halbleiter-Chipstrukturen bei erhöhter Temperatur erlauben die Beschleunigung von Alterungsprozessen auf z.B. wenige Stunden, indem ein Substrat mit Halbleiter-Chipstrukturen auf eine hohe Temperaturen geheizt wird. Relevante zu beobachtende Veränderungen wie z.B. Leiterbahnunterbrechungen können sich dann innerhalb von Sekunden abspielen. Mit dem erfindungsgemäßen Verfahren bzw. der Vorrichtung ist es möglich, dieses Geschehen zeitnah und genau zu beobachten. Es ist bekannt, das sich durch Diffusions- oder Elektromigrationsprozesse die Materialverteilung auf dem Substrat ändern kann. Diese Änderung der Materialverteilung führt zu einer Änderung des Bildkontrastes und kann im abbildenden Röntgenmikroskop beobachtet werden.

Es können röntgenmikroskopische Abbildungen erfolgen, die während des Stromflußes durch funktionsfähige Strukturen vorgenommen werden. Wenn ein höherer als der zulässige Strom fließt, lässt sich beobachten, an welchen Stellen die Strukturen stark verändert oder gar zerstört werden, so dass elektrische Unterbrechungen (englisch: voids) oder Kurzschlüsse hervorgerufen werden. Dieser Vorgang ist infolge der veränderten Materialverteilung als eine Veränderung des Röntgenkontrasts im Bild sichtbar.

Es können röntgenmikroskopische Abbildungen erfolgen, auf denen Fehlstellen, Verdünnungen der Leiterbahnen, Staubkörner und Unterbrechungen in Leiterbahnen gesucht werden können.

Es können röntgenmikroskopische Abbildungen unter Bestromung des Halbleiter-Schaltkreises erfolgen, die in Echtzeit eine Änderung des Bildkontrastes nachweisen. Die Änderung erklärt sich daraus, dass durch die angelegte elektrische Spannung die Elektronendichteverteilung geändert wird, was wiederum Rückwirkungen auf die Innerschalenelektronen hat, wodurch eine energetische Verschiebung der Absorptionskanten und eine Veränderung der Feinstruktur resultiert. Dazu ist es nötig, das Mikroskop mit stark monochromatischer Röntgenstrahlung zu betreiben, was z.B. durch Vorschalten eines Kristallgittermonochromators erreicht werden kann. Es ist dann möglich, im Röntgenbild diejenigen Gebiete in den elektronischen Strukturen zu lokalisieren, auf die sich der Stromfluß im Halbleiter-Chip konzentriert.

Alle diese Beobachtungen sind grundsätzlich auch mit einem rasternden Röntgenmikroskop möglich, sowohl im reinen Amplitudenkontrast, im reinen Phasenkontrast - d.h. bei einer Phasendrehung der nullten Beugungsordnung des Objekt-Röntgenlichtes um +90° (oder-90°) in der Phasenplatte - und im "optimierten Phasenkontrast". Im "optimierten Phasenkontrast" wird die Dicke der Phasenplatte so gewählt, daß ein gegebenes Objekt für ein vorgegebenes Signal -zu-Rausch Verhältnis mit minimaler Zahl von Photonen abgebildet werden kann, wodurch sich besonders kurze Belichtungszeiten ergeben, was für die kontinuierliche Beobachtung von zeitlichen Abläufen in Halbleiterchips wichtig ist, damit möglichst kurze Belichtungszeiten erreicht werden. Dabei resultiert im allgemeinen eine Phasenplatte, deren Phasenschiebung ungleich 0°,90°,180° und 270° ist.

Wird ein Rasterröntgenmikroskop mit energiereicher Strahlung betrieben, so kann Röntgenfluoreszenz-Strahlung aller derjenigen chemischen Elemente erzeugt werden, die Absorptionskanten besitzen, deren Energien geringer als die der anregenden Strahlung sind. *Gleichzeitig* kann das Transmissions-Signal im Rasterröntgenbetrieb beobachtet werden. Damit lassen sich mittels eines hinter der Probe angebrachten photonenenergie-selektiven Detektors in Abhängigkeit vom Ort des rasternden Röntgenflecks auf der Probe gleichzeitig verschiedene Elemente quantitativ und mit hinreichend hoher Selektivität nachweisen, um beispielsweise p- und n-dotierte Bereiche eines Halbleiters sichtbar zu machen. Dies ist auch wichtig z.B. bei der Beobachtung der zuvor bereits angesprochenen künstlichen Alterungsprozesse und der bereits erwähnten Elektromigration.

Weiterhin sind mit beiden Mikroskoptypen, dem abbildenden und dem rasternden Röntgenmikroskop, alle röntgenmikropischen Untersuchungen an den Proben möglich, die die Ausbreitung der Röntgenstrahlung durch den Probenraum - also das unter Luftdruck, Schutzgas oder Vakuum befindliche Volumen , im dem sich die Probe befindet - nicht verhindern, z.B. durch zu starke Absorption.

Insbesondere kann die Probe äußeren elektrischen und magnetischen Feldern ausgesetzt werden; sie kann mit Licht oder Strahlung beliebiger Wellenlänge bestrahlt werden. Sie kann Ionen- und Elektronenstrahlen und erhöhtem Druck oder mechanischen Spannungen ausgesetzt werden.

Die genannten Untersuchungen mit dem Röntgenmikroskop sind natürlich auch an vergleichbar aufgebauten Nanostrukturen möglich, z.B. an mikromechanischen Bauteilen oder photonischen Kristallen.

Die Erfindung wird nachfolgend anhand der in der Zeichnung dargestellten Ausführungsbeispiele näher erläutert. Die Zeichnung zeigt schematisch in:
- Fig.1: ein abbildendes Röntgenmikroskop mit einem Röntgenobjektiv (aber ohne Kondensor) zur Aufzeichnung eines mit einer Detektoreinrichtung mit Kamera aufgenommenen reellen Bildes einer zu untersuchenden Probe,
- Fig.2a: eine Zonenplatte,
- Fig.2b: eine Kondensorzonenplatte mit äußeren Segmenten, die frei sind von Zonenstrukturen,
- Fig.2c: einen segmentierten Phasenring,
- Fig.2d: eine segmentierte Blende,
- Fig.3: ein Röntgenmikroskop mit einem Röntgen-Kondensor, einem Röntgenobjektiv und einer Detektoreinrichtung mit Kamera,
- Fig.3a: ein Röntgenmikroskop gemäß Fig.3, zusätzlich mit einer Phasenplatte und einer Blende,
- Fig.4: ein Röntgenmikroskop, in dem ein Röntgenobjektiv ein reelles Bild der zu untersuchenden Probe entwirft, das mit einer Detektoreinrichtung mit Kamera aufgezeichnet wird und in dem zur Beleuchtung der Probe ein rotierender Kondensor genutzt wird und
- Fig.5: ein Raster-Röntgenmikroskop, das die Probe mit einem kleinem Röntgen-Lichtfleck punktweise durchstrahlt und dabei gleichzeitig Röntgen-Fluoreszenzstrahlung anregt.

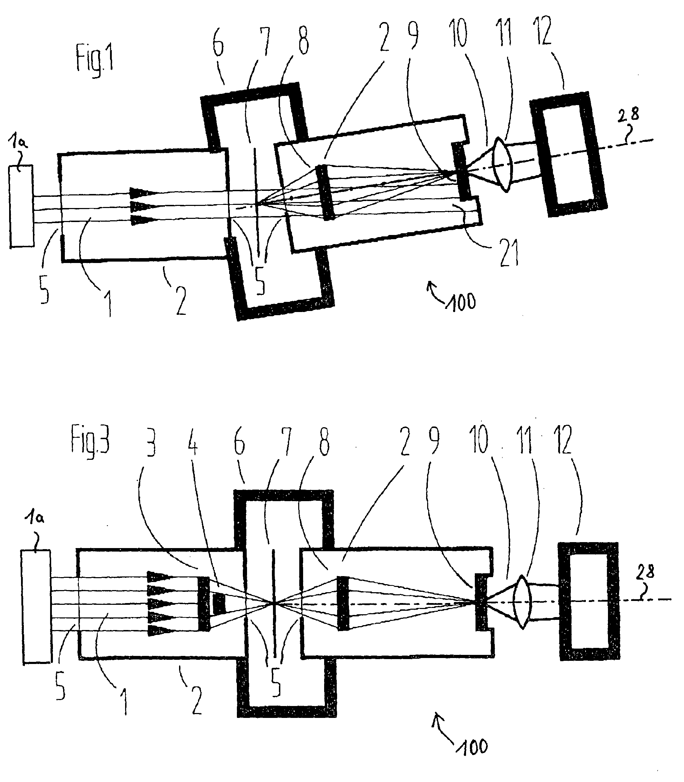

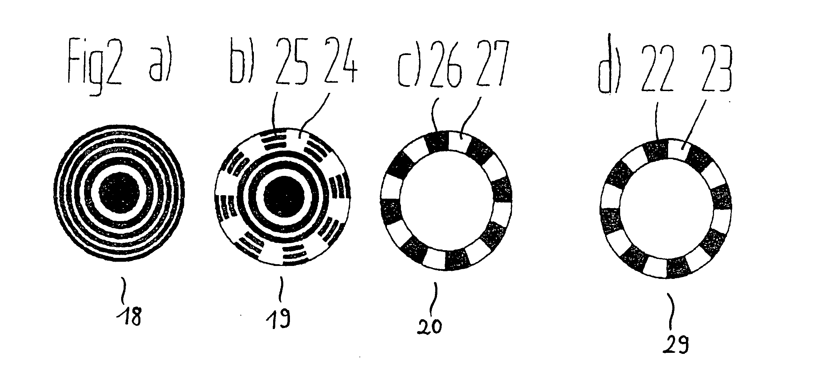

Die Fig.1 zeigt in schematischer Weise ein Röntgenmikroskop 100, das ohne einen Kondensor arbeitet. Dies bedeutet, dass eine von einer Röntgenquelle 1a (z.B. Elektronenspeicherring) stammende Röntgenstrahlung 1 ohne weitere Fokussierung auf ein zu untersuchendes Objekt 7 trifft. Das Objekt 7 ist ein Halbleiter-Substrat, das zu untersuchende mikromechanische oder elektronische Strukturen aufweist. Gemäß Fig.1 tritt die Röntgenstrahlung 1 durch einen mit Röntgenfenstern 5 vakuumdicht verschlossenen Vakuumkessel 2 hindurch, in dem Vakuum zur Vermeidung von Absorption der Röntgenstrahlung herrscht. Die geradlinig verlaufende Strahlung 1 beleuchtet das in einer Objektkammer 6 befindliche Objekt 7, das sich in Luft befindet.

Ein abbildendes Objektiv 8 bildet einen Bereich des Objekts 7 auf einen Röntgenkonverter 9 ab, der die Röntgenstrahlung in eine optische Strahlung 10 konvertiert, die meist im sichtbaren Wellenlängenbereich liegt. Die optische Strahlung 10 wird über eine Linse 11 von einer Kamera 12 aufgenommen. Der Röntgenkonverter 9, die Linse 11 und die Kamera 12 bilden also eine Detektoreinrichtung für die Röntgenstrahlung. Eine solche Detektoreinrichtung kann aber auch nur aus einem einzigen direkt beleuchteten Detektor bestehen, z.B. einem PN-CCD-Detektor oder einem MOS-CCD-Detektor, der anstelle des Röntgenkonverters 9 im Röntgenmikroskop 100 angeordnet wird. Diese verschiedenen Detektorarten für die Röntgenstrahlung sind für alle in den Figuren gezeigten Röntgenmikroskope 100 einsetzbar.

Besteht das abbildende Objektiv 8 aus einer Beugungsoptik wie z.B. einer Zonenplatte (und nicht aus einer Brechungsoptik wie dies weiter unten beschrieben ist), so kann das in Geradeausrichtung liegende Bildfeld nicht genutzt werden, da dort eine starke, das Bild störende Strahlung 21 nullter Ordnung sich dem Bild überlagern und den Kontrast vermindern würde. In diesem Fall muß eine Abbildung mit schräger Beleuchtung gemacht werden, so dass das Bild und die störende Strahlung 21 nullter Ordnung nebeneinander liegen. Dazu wird die optische Achse 28 des Röntgenmikroskops 100 gegen die Einstrahlungsrichtung der beleuchtenden Röntgenwelle geneigt, so daß eine Schrägbeleuchtung entsteht.

Es kann erforderlich sein - insbesondere wenn Elemente mit ähnlicher Ordnungszahl im Röntgenbild voneinander unterschieden werden solleneine Minimierung der zur Abbildung notwendigen Photonendichte im Objekt 7 vorzunehmen, da nebeneinander oder übereinander liegende Strukturen aus Elementen ähnlicher Ordnungszahlen besonders geringe Bildkontraste erzeugen können. Hierbei besteht das Ziel darin, die Wellenlänge herauszufinden, bei der die zur Abbildung erforderliche Photonendichte ein Minimum erreicht und somit bei minimierter Photonendichte ein Maximum an Signal-Rausch-Verhältnis im Bild erzielt werden kann.

Die minimale Photonendichte kann dadurch bestimmt werden, daß zunächst der Streuquerschnitt nach Rayleigh-Gans berechnet wird (vgl. z.B. Dissertation G.Schneider, Universität Göttingen 1992, sowie: Gerd Schneider, "Cryo X-ray microscopy with high spatial resolution in amplitude and phase contrast", in: Ultramicroscopy 75, (1998), Seiten 85-104, die minimale Photonendichte berechnet sich dort nach Formel 31). Ist dieser Streuquerschnitt null, so kann das Objekt nicht abgebildet werden. Dieser Streuquerschnitt ist allgemein ein Maß für das Strahlungs-Streuvermögen von feinen Strukturen und im Wellenlängenbereich der Röntgenstrahlung eine Funktion der atomaren Streufaktoren f1 und f2, der Wellenlänge und der Objektgröße. Die atomaren Streufaktoren f1 und f2 sind bei B.L. Henke et. al. tabelliert (B.L. Henke, E.M. Gullikson, and J.C. Davis: X-ray interactions,photoabsortion, scattering, transmission and reflection. E=50-3000 eV, Z=1-92, Atomic Data and Nuclear Data Tables, 27, S.1-144, (1982)).

Die bei Abbildungen im Röntgenmikroskop 100 benötigte Photonendichte verhält sich in sehr guter Näherung reziprok zum Streuquerschnitt, d.h. die Photonendichte erreicht bei der Wellenlänge ein Minimum, bei der der Streuquerschnitt ein Maximum erreicht. Zusätzlich ist die Transmission des Substrates zu berücksichtigen, d.h. um letztlich die notwendige Photonendichte und somit die optimale Wellenlänge für die Abbildung einer Struktur bestimmen zu können, muß der Kehrwert des Streuquerschnittes mit dem Kehrwert der Substrattransmission multipliziert werden. Nach diesem Verfahren kann dann der Wellenlängenbereich zur Abbildung bestimmter Strukturen innerhalb eines Schichtsystems optimiert werden hinsichtlich der notwendigen Photonendichte.

Ausgehend von der Berechnung der Photonendichte läßt sich auch die bei einer Wellenlänge in den Strukturen deponierte Strahlungsdosis berechnen und minimieren, um mögliche Strahlungseinflüsse auf die Strukturen soweit als möglich zu unterdrücken. Die minimale Dosis der hier betrachteten Strukturen ist proportional dem linearen Absorptionskoeffizienten des Materials, der Quantenenergie der Röntgenphotonen, dem Kehrwert des Streuquerschnittes und dem Kehrwert der Dichte des interessierenden Materials. Dabei ist für die Gültigkeit dieser Proportionalität vorauszusetzen, daß die Dicke der Strukturen bei der zur Untersuchung benutzten RöntgenWellenlänge geringer ist als deren 1/e Dicke, bei der die Strukturen noch 37% Röntgen-Transmission besitzen. Diese Bedingung ist aber für die hier betrachteten Materialien und deren Dicke in Leiterbahnen gegeben. Aus Gründen der Minimierung der Dosis, die in den interessierenden Strukturen deponiert wird, sollte dabei die gedünnte Seite des Substrats stets in Quellrichtung zeigend ins Röntgenmikroskop eingebaut werden. Auf dem Weg zu den interessierenden Strukturen wird die Röntgenstrahlung auf ihrem Weg durch den Wafer-Kristall dann bereits geschwächt und bestrahlt die Strukturen mit geringerer Intensität, als dies der Fall wäre, wenn die Strukturen auf der Seite lägen, die zur Strahlungsquelle hin gerichtet ist.

Um die Photonendichte bzw. minimale Dosis für Abbildung im a) Amplitudenkontrast, b) reinen Phasenkontrast und c) einem kombinierten Fall aus Amplituden- und Phasenkontrast (welcher zur Bildentstehung sowohl die Phasendrehung als auch die Absorption im Objekt ausnutzt) zu berechnen, können diese drei Fälle dadurch simuliert werden, daß a) der Realteil des komplexen atomaren Streufaktors Null gesetzt wird b) der Imaginärteil des komplexen atomaren Streufaktors Null gesetzt wird und c) keiner der beiden atomaren Streufaktoren verändert wird, d.h. die tabellierten Werte von B.L. Henke et al. aus "atomic data and nuclear data tables" (siehe oben) eingesetzt werden.

Die genannten Ablenkmagnete, Wiggler und Undulatoren eines Elektronenstrahl-Speicherrings sind Quellen intensiver Röntgenstrahlung und liefern einen hohen Fluß an Röntgenstrahlung. Dennoch ist die pro Sekunde zur Verfügung stehenden Anzahl an Photonen stets eine die Bildaufzeichnungszeit begrenzende Größe. Daher ist es sinnvoll, die Röntgenmikroskope im Phasenkontrast zu betreiben. Die Phasenschiebung der Phasenplatte ist so zu bemessen, daß das Mikroskop zur Bildaufzeichnung sowohl Amplitudenschwächung als auch Phasendrehung auswertet. Die Zahl der zur Bilderzeugung benötigten Photonen läßt sich minimieren, wenn die Phasenplatte für die jeweilige Wellenlänge und das Material der zu untersuchenden Struktur eine ganz bestimmte, individuell zu bestimmende Transmission und Phasendrehung besitzt. Im allgemeinen werden Phasendrehungen von ungleich +90° und -90° benötigt. Kriterium ist dabei, das beste Signal zu Rausch Verhältnis mit minimaler Photonenzahl zu erreichen. Programme dazu sind in der Literatur bei Gerd Schneider, "Cryo X-ray microscopy with high spatial resolution in amplitude and phase contrast", in: Ultramicroscopy 75, (1998), Seiten 85-104, zu finden.

Im Fall des abbildenden Röntgenmikroskops wird die Phasenkontrastabbildung durch einen Phasenring, der in der hinteren Fokalebene des Röntgenobjektivs platziert wird, erreicht (G. Schmahl et al.). Im Fall des Raster-Röntgenmikroskops sind die Untersuchungen von Strukturen auf Halbleitersubstraten auch mit Phasenkontrast-Anordnungen möglich, die hier erstmals beschrieben werden, und zwar auch mit Anordnungen ohne reale Phasenringe.

Die Fig.2a zeigt in Aufsicht eine Zonenplatte, die ein radialsymmetrisches Kreisgitter darstellt mit einer nach außen hin abnehmender Gitterkonstanten. Die hellen Zonenringe sind für die Roentgenstrahlung transparent. Die in der Fig.2a schwarz gezeichneten Zonen bestehen entweder aus einem Material, das Röntgenstrahlung absorbiert - dann spricht man von Absorptions- oder Amplituden-Zonenplatten - oder aus einem Material, das die Röntgenstrahlung besonders stark in ihre Phase schiebt und nur eine geringe Absorption besitzt - dann spricht man von Phasenzonenplatten. Zonenplatten für Röntgenstrahlung mit Durchmessern von unter 1 mm werden als Mikrozonenplatten bezeichnet. Zonenplatten für Röntgenstrahlung werden unter anderem als Röntgenobjektive 8 und Kondensoren 3 eingesetzt.

Die Figuren 2b bis 2d werden im Zusammenhang mit den folgenden Beschreibungen der weiteren Figuren beschrieben.

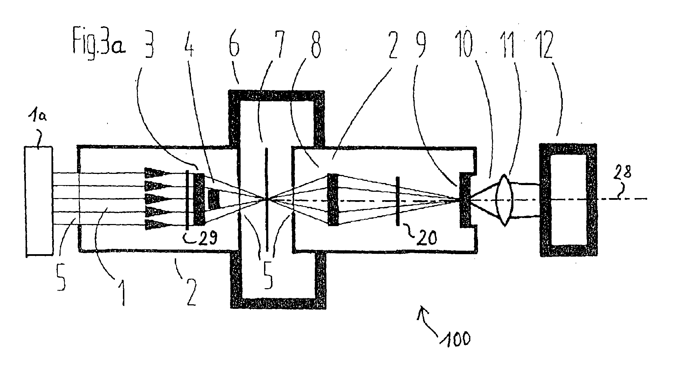

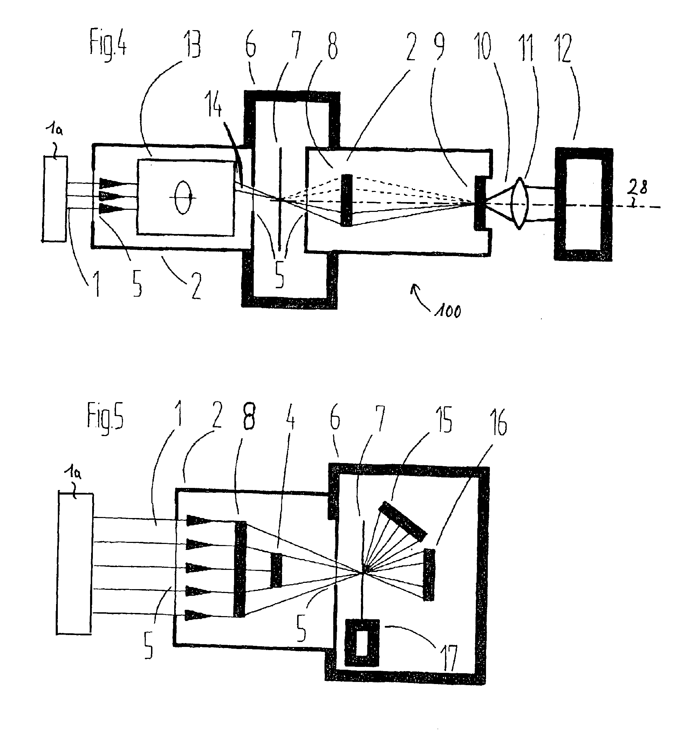

Gemäß Fig.3 wird das Objekt 7 mit Hilfe eines Röntgenkondensors 3 beleuchtet. Eine in der Mitte des entstehenden Strahlenkegels angeordnete strahlungsundurchlässige Blende 4 bewirkt eine hohlkegelförmige Beleuchtung des Objektes 7. Um mit einem abbildenden Mikroskop nach Fig. 3 mit Hohlkegelbeleuchtung schnell vom Amplitudenkontrast zum Phasenkontrast umschalten zu können oder um den Phasenwinkel der Phasenkontrastanordnung verstellbar zu machen, kann in der hinteren Fokalebene des Röntgenobjektivs 8 ein segmentierter Phasenring 20 angeordnet werden. Diese Anordnung ist in Fig.3a gezeigt. Der segmentierte Phasenring 20 besteht aus vielen phasenschiebenden und nicht phasenschiebenden Abschnitten 26, 27. Die Abschnitte 26, 27 sind vorzugsweise alle gleich groß und äquidistant auf den Bereich des Phasenrings 20 verteilt (Fig.2c). Wird als Röntgenkondensor 3 eine ringförmige Kondensorzonenplatte 19 (Fig.2b) benutzt, dann wird *simultan* ein Phasenkontrast- und ein Amplitudenkontrastbild auf dem Detektor 9, 12 erzeugt. Wird als Röntgenkondensor 3 ein rotierender Kondensor 13 nach Fig.4 benutzt, dann wird in der Bildebene während der Drehbewegung *abwechselnd* ein Phasenkontrast- und ein Amplitudenkontrastbild erzeugt und in der Bildebene nacheinander vom Detektor 9,12 aufgezeichnet.

Wird nun - wie es die Fig.3a zeigt - zur Verbesserung der Röntgenmikroskope 100 vor oder hinter der Ebene des Röntgenkondensors 3 (Fig.3) oder des rotierenden Kondensors 13 (Fig.4) eine Blende 29 (Fig.2d) aus transparenten Segmenten 23 und absorbierenden Segmenten 22 angeordnet, die in ihrem Aussehen dem segmentierten Phasenring 20 nach Fig.2c entspricht, so kann durch geeignete Drehung der Blende 29 oder des Phasenrings 20 um die optische Achse 28 in die eine oder andere Position erreicht werden, dass Röntgenlicht der nullten Beugungsordnung des Objekts 7 entweder nur durch den transparenten Bereich 27 des segmentierten Phasenrings 20 tritt oder nur durch den phasenschiebenden Bereich 26: Im Phasenkontrast stehen die Blende 29 und der Phasenring 20 derart zueinander, daß das Licht durch die Segmente 23 der Blende 29 in der 0. Ordnung des Objekts 7 nur durch die phasenschiebenden Segmente 26 des Phasenrings 20 fällt. Im Amplitudenkontrast fällt die Strahlung der 0. Ordnung nur in die Segmente 27 des Phasenrings 20. In allen anderen Zwischenstellungen von segmentiertem Phasenring 20 und der Blende 29 mit transparenten und absorbierenden Segmenten 23, 22 zueinander können beliebige Zwischenwerte der Phasenschiebung eingestellt werden.

Bei einer weiteren Verbesserung kann die segmentierte Blende 29 entfallen, indem als Röntgenkondensor 3 eine ringförmige Kondensorzonenplatte 19 (Fig.2b) verwendet wird, bei der nur dem Phasenring korrespondierende Segmente 25 mit Zonenabschnitten und zonenfreien Segmenten 24 strukturiert sind. Wird die derart segmentierte Kondensorzonenplatte 19 oder der segmentierte Phasenring 20 (Fig.2c) geeignet gedreht, so kann von der Abbildung im Phasenkontrast zur Abbildung im Amplitudenkontrastbild umgeschaltet werden: Im Phasenkontrast steht der Kondensor 3 so, daß das Licht der 0. Ordnung des Objekts 7 nur durch die phasenschiebenden Segmente 26 des Phasenrings 20 fällt, während im Amplitudenkontrast die Strahlung der 0. Ordnung nur dazwischen in die Segmente 27 fällt. In allen anderen Zwischenstellungen von segmentiertem Phasenring 20 und einer Kondensorzonenplatte 19 mit zonenfreien Segmenten 24 und Zonenabschnitten 25 zueinander können beliebige Zwischenwerte der Phasenschiebung eingestellt werden.

Durch eine weitere Verbesserung läßt sich die in sogenannter "kritischer Beleuchtung" ausgeleuchtete Objektebene homogener ausleuchten, indem die Kondensorzonenplatte 3 mit Hilfe von Stellelementen zweidimensional über das Objektfeld gerastert wird.

Zur Aufzeichnung eines reinen Phasenkontrast- bzw. Amplitudenkontrastbildes im Röntgenmikroskop 100 nach Fig.4 unter Verwendung eines rotierenden Kondensors 13 kann auch eine Chopperscheibe mit mindestens einem transmittierenden Segment irgendwo im Strahlengang angebracht werden. Die Chopperscheibe wird mit der Drehbewegung des rotierenden Kondensors 13 synchronisiert. Je nach Phasenwinkel zwischen Chopperscheibe und rotierendem Kondensor 13 wird die Aufzeichnung des Phasenkontrastbildes bzw. des Amplitudenkontrastbildes auf dem Detektor 9,12 erlaubt, indem man die Strahlung, die zum Erzeugung des unerwünschten Bildkontrastes führen würde, auf die Chopperscheibe fallen lässt und diese dadurch ausblendet. Dies kann auch außerhalb des Röntgenstrahlungsganges geschehen, wenn ein mechanischer oder elektro-optischer Verschluß zwischen Röntgenkonverter 9 und Kamera 12 gebracht wird oder indem die Kamera 12 durch elektronische Maßnahmen die Aufzeichnung nur während der Zeiten einschaltet, in denen das gewünschte, aufzuzeichnende Bild vorhanden ist.

Anstelle der bekannten Anordnung einer Phasenplatte oder Phasenrings nach Fig.2 c mit Stützfolie ist es möglich, diese phasenenschiebenden Elemente freitragend zu strukturieren. Bei einer freitragenden Strukturierung werden die Segmente an ihrem Rand durch eine Reihe feiner Stützstege, zum Teil speichenförmig oder statistisch verteilt ausgeführt, gehalten, die die Segmente untereinander und mit einem äußeren Haltering verbinden.

In abbildenden Röntgenmikroskopen 100 nach Fig. 3 werden zwei Optiken benötigt: eine Kondensoroptik 3, die die einfallende Röntgenstrahlung 1 auf das zu untersuchende Objekt 7 fokussiert und ein Röntgenobjektiv 8, das die Röntgenstrahlung auffängt, die das Objekt 7 durchdrungen hat. Das Röntgenobjektiv 8 erzeugt ein reelles Bild des Objektes 7 auf einer ortsauflösenden Detektoreinrichtung die nach einer Bildintegrationszeit ein Bildsignal an einen Monitor ausgibt.

Wie bereits erwähnt, besteht die ortsauflösende Detektoreinrichtung in abbildenden Röntgenmikroskopen 100 aus dem Röntgenkonverter 9, der Linse 11 und der Kamera 12. Die Kamera 12 zeichnet das Bild auf. Wegen der möglichen Schädigung der Kamera 12 bei direkter Bestrahlung mit sehr kurzen Wellenlängen wird aber aus dem reellen Röntgenbild am besten zunächst sichtbare Strahlung erzeugt, z.B. mittels eines fluoreszierenden Stoffes des Röntgenkonverters 9, z.B. eines Phosphors. Die sichtbare Strahlung 10 wird dann auf die Kamera 12 für sichtbares Licht, z.B. einen CCD-Detektor abgebildet und zwar mittels der Optik 11, die z.B. einen ablenkenden Spiegel enthalten kann - um die Kamera 12 aus dem direkten Röntgenstrahl und damit jeglicher möglicher Strahlenschädigung durch Röntgenstrahlung zu entfernen. Solche Strahlenschäden auf dem CCD-Detektor treten bei Verwendung von Wellenlängen unter 2 nm auf, da diese Röntgenstrahlung mit merklicher Transmission in einige Mikrometer Tiefe in Röntgen-CCD-Bildaufnehmer eindringen kann. In diesen Tiefen befinden sich aber die elektrischen Leiterbahnen, Isolationschichten und halbleitenden Funktionselemente eines CCD-Bildaufnehmers, die durch andauernde Bestrahlung mit relativ energiereicher Röntgenstrahlung bleibend beschädigt werden können, indem z.B. die Isolationschichten zwischen den Leiterbahnen gestört oder/und zerstört werden. Anstelle des Röntgenkonverters 9 kann aber auch direkt im Röntgenmikroskop 100 eine Kamera mit PN-CCD angeordnet werden, die unempfindlich gegen Strahlenschädigungen ist.

Wird ein solches abbildendes Röntgenmikroskop 100 im Phasenkontrast betrieben, so muß, wie in der Literatur beschrieben, eine Phasenplatte in der hinteren Fokalebene des Röntgen-Objektivs angeordnet werden. Für ein abbildendes Röntgenmikroskop 100 ist diese Phasenplatte üblicherweise ringförmig ausgebildet, also als Phasenring. Es ist auch beschrieben, daß bei Verwendung von Zonenplatten 18 als Röntgenobjektiv 8 es stets erforderlich ist, das Objekt 7 hohlkegelförmig zu beleuchten, um zu vermeiden, daß das Bild im zentralen Bereich von Strahlung ohne Information, die in Strahlung nullter Ordnung der Zonenplatte 18 (Mikrozonenplatte) bestehen kann, überlagert wird.

Deshalb wird in der Praxis stets ein Kondensor 3 gewählt, der aus seiner Mitte kein Licht auf das Objekt wirft. Dies kann z.B. mit einer ringförmigen Kondensorzonenplatte 19 geschehen oder es wird mittels Blende 4 hinter der Kondensoroptik die zentrale Strahlung ausgeblendet. Es ist auch in der Literatur beschrieben und in Fig. 4 dargestellt, daß ein abbildendes Röntgenmikroskop 100 als Kondensoroptik einen rotierenden Kondensor 13 enthält, von dem aus die Strahlung 14 schräg auf das Objekt 7 leuchtet. Durch Drehung des Kondensors 13 wird dann die notwendige Hohlkegelbeleuchtung für das Objekt 7 erzeugt. Der übrige Aufbau entspricht dem aus Fig.3.

Der rotierende Kondensor 13 kann auch rotierende Spiegel enthalten, die mit Multilayerschichten belegt sind. Solche Multilayerschichten besitzen für einen begrenzten Wellenlängenbereich und Einfallswinkel, die größer sein können als die Grenzwinkel für eine Totalreflektion, noch eine hohe Reflektivität, die typischerweise deutlich über 10 % beträgt.

Damit läßt sich bei Wellenlängen unterhalb von 1 nm mit Reflexionswinkeln arbeiten, die typischerweise 10 mal größer sind als die Einfallswinkel, bei denen einfache Spiegel unter Ausnutzung der Totalreflexion benutzt werden können. Typische Einfallswinkel für Multilayerspiegel von 1° sind realisierbar. Da dadurch eine geforderte Projektionsfläche der Spiegel in eine Ebene senkrecht zur optischen Achse 28 des Röntgenmikroskops 100 mit viel kürzeren Spiegellängen zu erreichen ist, vereinfacht die Nutzung von Multilayerspiegeln die Konstruktion eines rotierenden Kondensors 13. Es sind nur noch geringe Spiegellängen notwendig. Zudem vereinfacht sich die Winkeljustierung der Spiegel, da die einzuhaltenden absoluten Toleranzen der Winkel viel größer sind als bei Nutzung von Einfachspiegeln mit Totalreflexion.

In Raster-Röntgenmikroskopen gemäß Fig. 5 wird ein Röntgenobjektiv 8 mit einer Röntgenwelle 1 beleuchtet. Das Röntgenobjektiv 8 fokussiert die Röntgenwelle 1 in der Ebene des Objekts 7 zu einem kleinen Röntgenlichtfleck. Das das Objekt 7 durchstrahlende Röntgenlicht wird mit einem Röntgendektor 16 ohne oder mit Ortsauflösung gemessen. Das Objekt 7 bewegt sich dabei in rasternder Bewegung mittels eines Rastermechanismus 17, der Translatoren enthält. Diese können Piezoelemente, Pneumatiken, Tauchspulen, mechanische Spindeln, Hebel oder sonstige Verschiebeeinrichtungen enthalten. Detektor 16 registriert das Objekt 7 durchdringende Röntgenlicht. Der Aufbau des Bildes erfolgt Punkt für Punkt auf einem Monitor, also seriell. Die Rasterung erfolgt üblicherweise, indem sich entweder das Objekt 7 zweidimensional oder das Röntgenobjektiv 3 zweidimensional oder beide Elemente in zueinander senkrechten Richtungen bewegen. Hinter dem Röntgenobjektiv 8 befindet sich noch eine Röntgenstrahlung absorbierende Blende 4, in deren Schatten der Röntgenlichtfleck erzeugt wird. Solche Rastermikroskope sind in der Literatur ausführlich beschrieben.

Soll ein Raster-Röntgenmikroskop im Phasenkontrast betrieben werden, so ist es nötig, vor einem ringförmigen Teil des Röntgenobjektivs 8 eine ringförmige Phasenplatte anzubringen, die die auf sie treffende Röntgenwelle in geeigneter Weise dreht (Details sind in der Literatur beschrieben). Die ringförmige Phasenplatte besteht aus einem Material geeigneter optischer Konstanten, das auf einer für Röntgenstrahlung transparenten Folie aufgebracht ist und die konzentrisch zum Röntgenobjektiv 8 justiert werden muß.

Eine weitere, in der Literatur beschriebene Möglichkeit zur rasternden Phasenkontrast-Röntgenmikroskopie ist gegeben, wenn anstelle eines Phasenringes eine ganz normales Röntgenobjektiv benutzt wird, und wenn zur Gewinnung der Phaseninformation ein in der Fläche segmentierter, ausgedehnter Detektor benutzt wird, deren Segmente einzeln ausgelesen werden können. Die Phaseninformation wird dann durch Verknüpfungen der einzelnen Signale der Segmente erhalten, z.B. durch Differenzbildung von Signalen gegenüberliegender Segmente.

Wird ein Rasterröntgenmikroskop mit energiereicher Strahlung betrieben, so kann Röntgenfluoreszenz-Strahlung aller derjenigen chemischen Elemente erzeugt werden, die Absorptionskanten besitzen mit Energien geringer als die der anregenden Strahlung. Damit kann ein Transmissions-Rasterbild und ein Fluoreszenzbild gleichzeitig aufgenommen werden.

### Bezugszeichenliste

- 1a: Röntgenstrahlungsquelle
- 1: einfallende Röntgenstrahlung
- 2: Vakuumkessel
- 3: Röntgenkondensor
- 4: strahlungsundurchlässige Blende
- 5: röntgenstrahlungstransparentes Fenster
- 6: Objektkammer
- 7: zu untersuchendes Objekt: Halbleiter-Substrat
- 8: Röntgenobjektiv
- 9: Röntgenkonverter, z.B. ein Phosphor
- 10: sichtbares Licht
- 11: Linse
- 12: Kamera
- 13: Rotierender Kondensor
- 14: vom Kondensor fokussierter Röntgenstrahl
- 15: Detektor für Röntgen-Fluoreszenz
- 16: Detektor für transmittierte Röntgenstrahlung
- 17: Rastermechanismus
- 18: Zonenplatte
- 19: ringförmige Kondensorplatte
- 20: segmentierter Phasenring
- 21: direktes Licht in nullter Ordnung
- 22: absorbierendes Segment
- 23: nicht absorbierendes Segment
- 24: transmittierende Segmente ohne Zonenstrukturen
- 25: radial unverschobene Zonensegmente
- 26: phasenschiebendes Segment eines Phasenringes
- 27: nicht phasenschiebendes Segment eines Phasenringes
- 28: optische Achse des Röntgenmikroskops
- 29: Blende mit absorbierenden und transparenten Segmenten (22,23)
- 100: abbildendes Röntgenmikroskop

## Patentansprüche

1. Verfahren zur Untersuchung von Strukturen auf einem eine Dicke aufweisenden Halbleiter-Substrat (7) gekennzeichnet durch folgende Schritte:
- Durchstrahlen und Abbilden der Strukturen mit Röntgenstrahlung (1) in einem abbildenden Röntgenmikroskop auf einen ortsauflösenden Detektor (9,12) und
- Einstellen einer Wellenlänge oder eines Wellenlängenbereichs der Röntgenstrahlung in Abhängigkeit der Dicke des Halbleiter-Substrats (7) derart, dass sowohl die Transmission der Röntgenstrahlung durch das Halbleiter-Substrat (7) für eine Detektion der Röntgenstrahlung zumindest ausreichend groß ist als auch ein kontrastreiches Bild erhalten wird.

2. Verfahren nach Anspruch 1, **dadurch gekennzeichnet, dass** die Dicke des Halbleiter-Substrats (7) unter Erhaltung der Strukturen verringert wird.

3. Verfahren nach Anspruch 1 oder 2, **dadurch gekennzeichnet, dass** bei Silizium als Halbleiter-Substrat (7) mit einer Substratdicke von weniger als 30 µm eine Röntgenstrahlung mit einer Wellenlänge zwischen 0.1 nm und 2 nm verwendet wird.

4. Verfahren nach einem der vorhergehenden Ansprüche, **dadurch gekennzeichnet, dass** die Wellenlänge der Röntgenstrahlung gemäß den Algorithmen für das Streuvermögen von Rayleigh-Gans derart gewählt wird, dass für die Strukturen auf dem Substrat (7) ein bestmögliches röntgenoptisches Streuvermögen gegeben ist, um ein kontrastreiches Bild mit hohen Signal-zu-Rausch Verhältnis zu erhalten.

5. Verfahren nach einem der Ansprüche 1 bis 3, **dadurch gekennzeichnet**, **dass** die Wellenlänge der Röntgenstrahlung für die Untersuchung von Metallstrukturen auf dem Substrat (7) in der Nähe der entsprechenden Absorptionskanten der Metalle gewählt wird, so dass sich ein großer Bildkontrast ergibt.

6. Verfahren nach einem der vorhergehenden Ansprüche, **dadurch gekennzeichnet, dass** die Strukturen unter verschiedenen Beobachtungswinkeln abgebildet werden, um stereographische und tomographische Rekonstruktionen zu ermöglichen.

7. Verfahren nach einem der vorhergehenden Ansprüche, **dadurch gekennzeichnet, dass** das Röntgenmikroskop ein reelles Bild erzeugt und das Röntgenmikroskop im Phasenkontrast betrieben wird, für den die belichtende Photonenzahl und die Belichtungszeit minimal ist.

8. Abbildendes Röntgenmikroskop zur Untersuchung von Strukturen auf einem eine Dicke aufweisenden Halbleiter-Substrat (7) mit
- einem Objektiv (8) zum Abbilden der Strukturen mit Röntgenstrahlung auf einem ortsauflösenden Detektor (9,12) und mit
- einer Röntgenstrahlungsquelle (1a), mit der die Wellenlänge der Röntgenstrahlung in Abhängigkeit der Dicke des Halbleiter-Substrats (7) derart einstellbar ist, dass sowohl die Transmission der Röntgenstrahlung durch das Halbleiter-Substrat (7) für eine Detektion der Röntgenstrahlung zumindest ausreichend groß ist als auch ein kontrastreiches Bild erhalten wird.

9. Abbildendes Röntgenmikroskop nach Anspruch 8, **dadurch gekennzeichnet, dass** eine segmentierte Phasenplatte (20) in der hinteren Fokalebene des Röntgenobjektivs (8) angeordnet ist.

10. Abbildendes Röntgenmikroskop nach Anspruch 8 oder 9, **dadurch gekennzeichnet, dass** eine segmentierte Blende (29) nahe einem Kondensor (3) des Röntgenmikroskops angeordnet ist oder als Kondensor (3) eine segmentierte, ringförmige Kondensorzonenplatte (19) oder ein rotierender Kondensor (13) mit einer Chopperscheibe vorgesehen sind.
